# EUROPEAN PATENT APPLICATION

(11) **EP 4 207 404 A1**
(43) Date of publication of application: **05.07.2023**
(21) Application number: 21218241.4
(22) Date of filing: 30.12.2021
(51) Int. Cl.: H01M 8/08, H02J 3/28

(54) **PERMANENTLY AVAILABLE ENERGY**

(71) Applicant: Phan Ngoc, Ngan, 1410 Waterloo (BE)
(72) Inventor: Phan Ngoc, Ngan, 1410 Waterloo (BE)

(57) **Abstract**

Method for feeding renewable energy to the grid to cope with energy deficit situations for short and extended periods of time, and characterized by the use of units provided to reduce the releases of thermal energy to the environment; shutting down the energy capture mode of these units and use them to feed the grid with their own energy production, whenever there is a need to fill the energy deficit of the grid; switching back these units to their normal energy capture mode for long term global warming combat, when there is no longer a need to feed the grid.

## Description

### Technical Field

The invention relates to the field of energy makeup supply to grids that are sourced from intermittent wind and solar energy. It makes use of the Energy Capture and Sequestration units described in patent applications BE20210015 and FR2102299.

### Background Art

Currently, when discharging energy to the grid, the existing Long Duration Energy Storage systems are only capable of returning only a fraction of the energy they received from the grid. The reason for this is their imperfect efficiencies in energy conversion both at charging and discharging.

The time storage capability of current industrial systems is also limited, as they can store energy only for hours or weeks. There is a need for very long-term energy storage sufficient to cope with seasonal changes in energy needs.

To alleviate the economic difficulties caused by the imperfect efficiency and short storage capability of storage systems, a solution has been found for feeding the grid with Renewable Energy electricity at 100% efficiency, during extended periods of time.

### Summary of invention

With the Energy Capture and Sequestration units described in patent applications BE20210015 and FR2102299, and with due consideration of the time scale needed for combating global warming, the method of this invention makes use of the power available from Energy Capture and Sequestration units to feed the grid with Renewable Energy electricity at the full 100% efficiency, and this for extended periods of time.

### Brief description of drawings

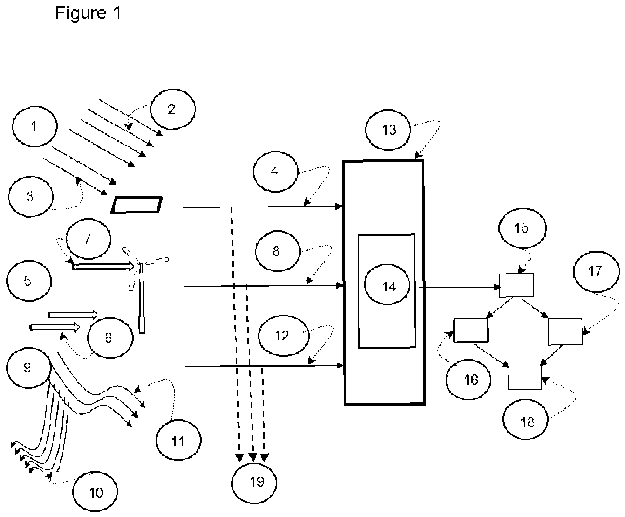

Figure 1, which comes from patent applications BE20210015 and FR2102299, shows the block diagram of the Energy Capture and Sequestration unit. Solar energy 1 is under-exploited because the major part 2 of the solar energy received from the sun is let free and is heating up the part of the globe exposed to sun light. Only a small part 3 of this energy is currently converted to electrical energy. The process can use an additional amount of this energy 4 to convert chlorides to hydroxides for energy capture purposes inside Plant 13 where Mg, Ca, Na and K chlorides in aqueous solution 14 are electrolytically converted to insoluble and soluble hydroxides 15. The insoluble hydroxides 16 are Mg and Ca hydroxides, and the soluble hydroxides 17 are Na and K hydroxides. They are stored in 18.

Similarly, wind energy 5 is under-exploited because the major part of this energy 6 is let free and releases calories to the environment. Only a small part 7 of this energy is currently converted to electrical energy. The process can use an increased amount of this energy 8 to convert chlorides to hydroxides.

Likewise, the hydraulic energy of water, tidal movements and waves 9 is under-exploited because the major part of this energy, mainly of waves, 10 is let free and releases calories to the environment. Only a small part 11 of this energy is currently converted to electrical energy. The process can use an increased amount of this energy 12 to convert chlorides to hydroxides.

The unit electrical current feeding the unit is converted as necessary to obtain the correct voltage, frequency and phases for use by the equipment, and for energy feed to the grid 19 when the unit is in grid feed mode. When in energy capture mode, direct current is made available to the electrolysers 14.

### Description of embodiments

The description of Energy Capture and Sequestration units are reproduced here, showing the use of intermittent wind and solar energy among other things. These units capture atmosphere energy for sequestration in the molecules of hydroxides. They are powered typically by their own 8 MW wind turbines and solar panels, although larger power capability is possible. To meet the target of global warming reduction, a large number of Energy Capture and Sequestration units are needed for implementation all over the continents. Removing energy from the atmosphere is an efficient way to reduce air CO₂ concentration, as when cold this heat trapping gas is more soluble in the atmosphere mist and water droplets, and wetlands and oceans. We may note that despite the application of the current direct carbon dioxide removal methods, the air CO₂ concentration is still increasing throughout the recent decades.

The function of these Energy Capture and Sequestration units is to reduce the releases of thermal energy to the environment caused by solar energy, wind energy, and hydraulic energy, in view of reducing global warming; function that is characterized by:
a- a capture of these three primary energies under a form that allows their sequestration in stable materials that are Mg, Ca, Na and/or K hydroxides, b- said form being electrical energy that is used to electrolytically convert Mg, Ca, Na, and/or K chlorides in aqueous solution (such as sea and ocean water, or aqueous solutions of salts extracted from mines) to Mg, Ca, Na and/or K hydroxides, which then definitely sequester these primary energies as chemical energy.

Further, by virtue of the diversity of Renewable Energy sources used by the Energy Capture and Sequestration units, i.e., wind and solar, the probability to have both sources unavailable at the same time is low.

The arrangement of the Energy Capture and Sequestration units in distributed network across large regions further reduces the probability of having their periods of low wind or solar energy coincident with those of the grid they serve. Anyway, in period of low wind or solar energy, after their energy sequestration function is shut down, the Energy Capture and Sequestration units can still feed the grid with their low energy available.

During normal operation the units power supply are fully used to cooldown the atmosphere, hence there is no underutilization of the equipment. When there is a need to feed the grid, the energy sequestration function is shutdown, and the energy production of the Energy Capture and Sequestration units is fed to the grid, without any loss of efficiency.

This grid feeding can last for very long periods of time, because combating global warming is a very long process, i.e., extending over many decades till the end of the century, compared with the short duration of energy deficit of the grid, i.e., hours or days or months. The short grid feeding operation is insignificant compared with the time frame of the global warming combat.

Also, the sizing of the Energy Capture and Sequestration units was performed with a lot of conservatism, because the effect on CO₂ concentration induced by atmosphere cooldown was not taken into account. With the cooldown, more CO₂ will be absorbed in the mist and water droplets of the atmosphere, and then in wetlands and oceans. With CO₂ being removed, the intensity of greenhouse effect will be reduced, which in turn will help further cooling down the atmosphere, and less energy will be needed from the Energy Capture and Sequestration units.

After few years of operation there is margin available in the power capability of the Energy Capture and Sequestration units.

We can take advantage of the margin available to speed up the cooldown, although this is not required, or as we do here, we can use that margin to feed energy to the grid for extended periods of time as needed, without jeopardizing the final objectives of global warming reduction.

It is thus not a mere use of expensive standby power plants to cope with the intermittency of Renewable Energy. We had to find a source of power that is normally used for an objective with a very long-time frame (several decades) to serve the grid for a relatively short period of time (several months) without compromising the long-term climate preservation objectives. That source is available with the Energy Capture and Sequestration units, with their full Renewable Energy supply fed to the grid with 100% efficiency, when there is a need to fill the energy deficit of the grid.

Since the Energy Capture and Sequestration units can switch from the energy capture mode to the grid feed mode during a long period of time, we can use them in grid feed mode during winter when there is a deficit in grid energy, and at the end of winter revert them back to their normal duty, capturing energy to combat global warming during the warm and hot seasons.

They can also be used for power valley filling when the normal means for peak shaving and valley filling are insufficiently available.

Finally, the energy flow in the direction grid to Energy Capture and Sequestration units is also possible, provided the capacity of the electrolyzing units of the existing energy capture units is increased. By doing so the Energy Capture and Sequestration units can also serve the grid in power peak shaving mode.

## Claims

1. Method for feeding renewable energy to the grid to cope with energy deficit situations during short and extended periods of time, and **characterized by**:
a- the use of units provided to reduce the releases of thermal energy to the environment caused by solar energy, wind energy, and hydraulic energy, in view of reducing global warming, and **characterized by**:
(i)- a normal energy capture mode of operation, whereby solar energy, wind energy, and/or hydraulic energy are captured under a form that allows their sequestration in stable materials that are Mg, Ca, Na and/or K hydroxides,
(ii)- said form being electrical energy that is used to electrolytically convert Mg, Ca, Na, and/or K chlorides in aqueous solution (such as sea and ocean water, or aqueous solutions of salts extracted from mines) to Mg, Ca, Na and/or K hydroxides, which then definitely sequester these primary energies as chemical energy,
b- the shutting down of the energy capture mode of the units described in a-, and use them to feed the grid with their own energy production, whenever there is a need to fill the energy deficit of the grid,
c- the switching back of the units described in a- to their normal energy capture mode for the long term global warming combat, when there is no longer a need to feed the grid.

2. Method according to Claim 1 but with the electrolyzing capacity of the units described in a- increased to accommodate for additional energy feed, and **characterized by** the use of these units in the operation mode by which they accept the excess energy discharged by the grid.

## Amended claims

### Amended claims in accordance with Rule 137(2) EPC.

1. Method for feeding renewable energy to the grid to cope with energy deficit situations during short and extended periods of time, and **characterized by**:
a- The use of units provided to reduce the releases of thermal energy to the environment caused by solar energy, wind energy, and the hydraulic energy, in view of reducing global warming, and **characterized by**:
i. a normal energy capture mode of operation, whereby solar energy, wind energy, and the hydraulic energy are captured under a form that allows their sequestration in stable materials that are Mg, Ca, Na and/or K hydroxides,
ii. said form being electrical energy that is used to electrolytically convert Mg, Ca, Na, and/or K chlorides in aqueous solution (such as sea and ocean water, or aqueous solutions of salts extracted from mines) to Mg, Ca, Na and/or K hydroxides, which then definitely sequester these primary energies as chemical energy,
b- The shutting down of the energy capture mode of the units described in a-, and use them to feed the grid with their own energy production, whenever there is a need to fill the energy deficit of the grid,
c- The switching back of the units described in a- to their normal energy capture mode for the long term global warming combat, when there is no longer a need to feed the grid.

2. Method according to Claim 1 but with the electrolyzing capacity of the units described in a- increased to accommodate for additional energy feed, and **characterized by** the use of these units in the operation mode by which they accept the excess energy discharged by the grid.
